# EUROPEAN PATENT APPLICATION

(11) **EP 4 517 272 A1**
(43) Date of publication of application: **05.03.2025**
(21) Application number: 23461642.3
(22) Date of filing: 31.08.2023
(51) Int. Cl.: G01D 7/00

(54) **SYSTEM FOR A REMOTE MEASUREMENT OF A CHANGE OF A PHYSICAL QUANTITY**

(71) Applicant: Uniwersytet Zielonogórski, 65-417 Zielona Góra (PL)
(72) Inventor: Ostrowski, Kacper, 65-533 Zielona Gora (PL); Paczkowski, Jacek, 67-100 Nowa Sol (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(57) **Abstract**

The invention discloses a system for remotely measuring a change of a physical quantity which comprises an analogue measuring device and a digital distance reading device, characterised in that it comprises an analogue measuring device requiring no power supply, which has a housing in which there is an opening for a light beam, a mirror onto which the light beam falls, which mirror is connected to a material sensitive to the physical quantity being measured, a light focusing element and a coloured reflective standard, whereby the analogue measuring device uses a change of a physical quantity in the material sensitive to the measured quantity to change the angle of position of the mirror, which reflects the light beam from the light focusing element and directs it to the colour reflective standard, mechanically converting the measurement result into a specific colour from the standard, which then reflects the beam of a specific colour outside the housing, allowing the colour to be read, and a digital device reading the colour from a distance and assigning a specific change of a physical quantity value to this specific colour.

## Description

### Field of invention

The present invention relates to a system for remote measurement of change of a physical quantity, which includes analogue measuring devices and digital distance reading devices.

### Background of the invention

Japanese patent application JP2007164506A describes a measurement system in which sensors emit measurements via light and a vision system reads the measurements. With the vision system (in particular, a camera), it is possible to track multiple sensors at once, taking into account their positions, so that the final result can be a 3D map showing the distribution of the measured value in space. From this document, the sensors are fed with the assumption that the sensor: 1 - emits light, 2 - modulates it according to an assumed pattern, including the pulsation frequency, 3 - the transmitted data is already digitally encoded).

The solution according to the present invention is mechanical, based on light reflection and does not need a power supply (sensor). In addition, the transmitted light signal is analogue and the digitisation of the data takes place only on reception by a digital device (camera). The solution according to the present invention was to solve the problem of locating sensors in hard-to-reach places, where replacing batteries can be problematic and costly, so these are significant changes.

US patent application US2007047617A1 presents an optical temperature measurement also by means of colour, but the colour does not store information about the temperature value, but about the range within which the temperature reading falls. The device is electronic.

US patent application US2017370783A1 describes a solution similar to the present invention. The authors use nano-elements that, as in the proposed solution, change volume under the influence of temperature (bend or straighten). Along with the shape, the reflection properties change, the incident light being shifted relative to the reflected light the more the element is bent. To apply this type of temperature measurement on a normal scale (not nano), a membrane of such elements is built, which reflects light in an assumed way. Spectroscopic analysis is then carried out using an optical detector.

The solution according to US2017370783A1 differs from that proposed in the present invention in the following way, the solution according to US2017370783A1 uses the phenomenon of light scattering by modifying the temperature-sensitive element to examine the temperature. The present invention is based only on the expansion of the temperature-sensitive element, which affects the direction of the sunlight by modifying the position of the mirror. Thanks to this difference, the detector is independent of the optical properties of the temperature-sensitive element. It is (as in the above patent) only dependent on the expansion properties. This makes the colour pattern freely modifiable and can reflect any selected wavelengths of visible or visible light. This makes it possible to maximise the contrast between colours and thus reduce measurement errors while maintaining the same sensitivity of the optical detector. Furthermore, scattering analysis is computationally more complex than colour detection (identification).

US patent application US2015122017A1 describes a material that changes the absorption properties of light depending on the humidity of the environment. The method involves shining light on a material that has a mirror layer on the underside. The colour after reflection is then tested.

The present invention is based on the expansion, and not, as the above patent application, on the change of the light absorption parameters, of the humidity-sensitive element, which influences the direction of sunlight by modifying the position of the mirror. Thanks to this difference, the detector is independent of the optical properties of the humidity-sensitive element. This makes the colour pattern freely modifiable and can reflect any selected wavelengths of visible or visible light. This makes it possible to maximise the contrast between colours and thus reduce measurement errors, while maintaining the same sensitivity of the optical detector.

US patent application US2749751A depicts an anemometer that swings an arrow depending on wind strength and uses gravity to balance wind strength.

### The aim of the invention

The aim of the present invention was to develop such a physical quantity change measurement system, which enables the measurement of a physical quantity at a distance in the absence of a power supply, be it battery or mains power of the measurement apparatus. This objective was achieved by combining the advantages of analogue sensors driven by the physical quantity being measured and the vision equipment that reads out the measurement.

### The summary of the invention

This purpose is achieved by a system according to the present invention, which is a system for remotely measuring a physical change, which comprises an analogue measuring device and a digital distance reading device, characterised in that it comprises an analogue measuring device requiring no power supply, which has a housing in which there is an opening for the light beam, a mirror on which the light beam falls, which mirror is connected to a material sensitive to the physical quantity to be measured, a light focusing element and a coloured reflective standard, whereby the analogue measuring device uses a physical change in the material sensitive to the measured quantity to change the angle of position of the mirror, which reflects the light beam from the light focusing element and directs it to the colour reflective standard, mechanically converting the measurement result into a specific colour from the standard, which then reflects the beam of a specific colour outside the housing, allowing the colour to be read, and a digital device reading the colour from a distance and assigning a specific physical change value to this specific colour.

### Brief description of drawing

The object of the present invention is presented in figures, where:
Fig. 1 shows a schematic view of the analogue part of the system according to the present invention in perspective view;
Fig. 2 shows a schematic view of the analogue part of the system according to the present invention in perspective view with a small change of a physical quantity - a small change in the angle of incidence translates into a significant change in colour;
Fig. 3 shows a schematic view of the analogue part of the system according to the present invention in perspective view, detailing the focusing lens with rim;
Fig. 4 shows a schematic view of the analogue part of the system according to the present invention in perspective view for the moisture measuring device;
Fig. 5 shows two possible focuses of light on the pattern;
Fig. 6 shows a schematic view of a section of the analogue part of the system according to the present invention with a modification with a rigid material that changes quantity according to temperature;
Fig. 7 shows a schematic view of a section of the analogue part of the system according to the present invention with a modification of the elastic material changing quantity according to humidity with a tension spring;
Fig. 8 shows a schematic view of a section of the analogue part of the system according to the present invention with modification by adding a mechanical anemometer for measuring wind speed.

### Detailed description of the invention

One type of measuring device is thermometers that use temperature expansion. These include, for example, mercury thermometers or bimetal thermometers. Building on the change of a physical quantity in material under the influence of an external factor and then using this to optically represent the measurement result (usually an arrow against a scale) has a number of advantages:
- does not require an electrical supply,
- provides reasonably good accuracy over a wide measurement range,
- is characterised by high measurement stability,
- is characterised by resistance to environmental factors,
- is faultless.

The problem, on the other hand, is that the data is presented in an optical (human-readable) rather than digital way, and also reading the measurement requires physical presence at the sensor.

The solution according to the present invention consists of dividing the measuring system into analogue measuring devices and digital distance reading devices.

An analogue measuring device, which is passive and requires no power supply, uses a change of a physical quantity in the material sensitive to the measured quantity (e.g. a bimetal to temperature) to alter the position (change in angle) of a mirror, which reflects light from a lens and projects it onto a colour reflective standard. In this way, the measurement is mechanically converted to a specific colour from the standard.

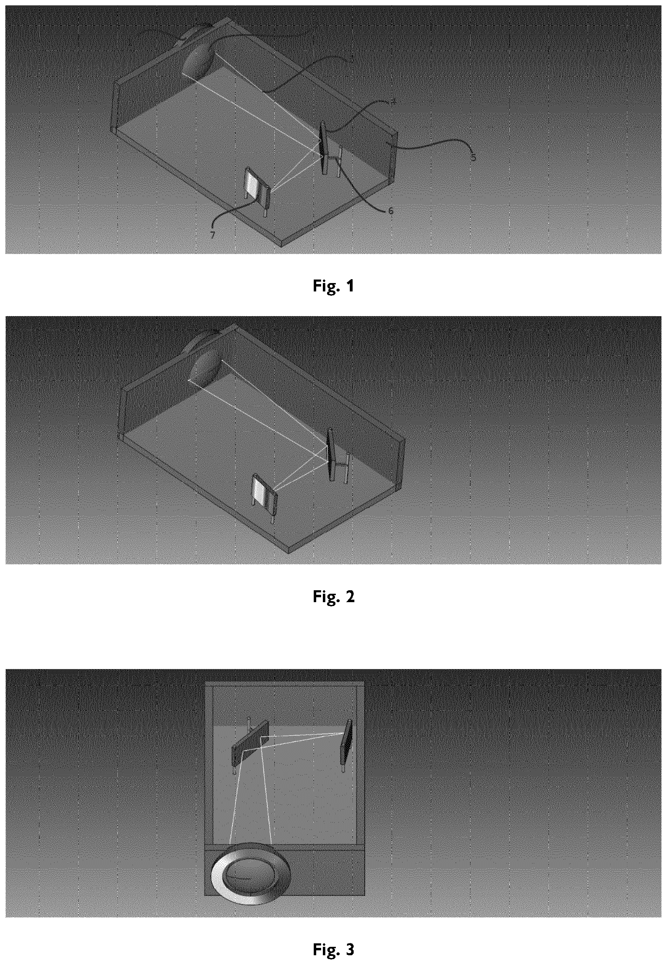

The parameters of the mirror, the surface of the standard and the lens are chosen so that the light entering the device reflects off the standard and returns back. A diagram of the analogue part of the system according to the present invention in perspective view is shown in Fig. 1, where
1. perimeter around lens with pattern
2. focusing lens
3. light beam
4. mirror
5. housing
6. material sensitive to the quantity to be measured, capable of changing the angle of the mirror
7. reflective pattern.

The figures show that a small change in angle, i.e. a small change of a physical quantity, translates into a significant change in colour from the pattern (Fig. 2).

All the colours from the standard are also placed on the lens surround. This facilitates reading by a digital reading device (Fig. 3).

The focusing lens can be supplemented with polarising filters to effectively counteract the reflection of light through the lens.

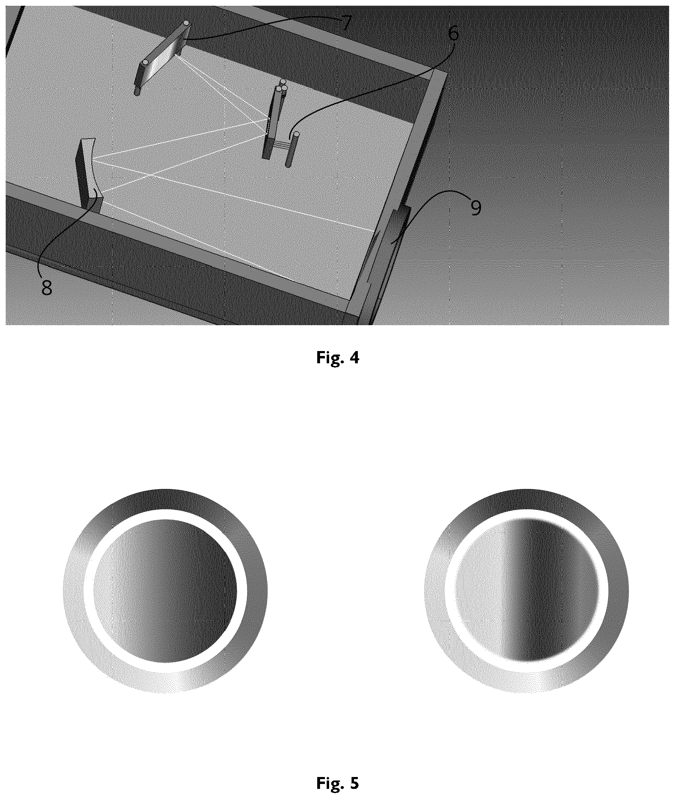

In addition, the optical design can be modified so that the curvature of light from outside is based not on a lens, but on a curved mirror (Fig. 4). This will be based on a similar principle to the Herschel mirror telescope.

Below, Fig. 4 shows a modified optical design with a version of the moisture measurement, where 8 - curved mirror for focusing light, 9 - border around the aperture (no lens).

A device constructed in this way does not require batteries and has all the desirable features of expansion sensors. The difference is that instead of indicating the measurement value on a numerical scale, there is an indication of the colour, which will be more readable to a digital device even from a long distance. The resolution of the camera (sensor) can be much lower, as in order to identify the colour it is enough (depending on the specific noise characteristics of the sensor) to have a dozen or so pixels, then reading the indication on the scale requires an area of several hundred pixels. And that too is assuming a reading from only one frame. The noise error in the case of colour (as proposed) can also be removed by extending the measurement time (obtaining multiple frames) and averaging the results. In the case of a pitch photo, increasing the number of frames will do nothing. It is worth pointing out that the operation of projecting colour onto a number is not computationally complex, and that the recognition of the measurement by a photograph of a graduated pointer involves advanced image processing. It is also based on reflected light, so the analogue device has no need to emit - to have its own light source.

A digital (active - powered) reading device is an apparatus / camera / colour-sensitive detector with built-in software. Such a device, while taking pictures, captures the measurement by synchronising data from all the analogue devices it has been pointed at.

The software then reads the colour from the lens/hole light, corrects for the colour from the perimeter (standard) and projects it onto the measured value.

The way the image is projected onto the measurement:
A different concentration of light on the pattern (in practice, a different distance of the reflective pattern from the focal length) is allowed. The closer the light is focused the more uniform the colour is on the lens / in the aperture light (curved mirror variant) (Fig. 5, left).

On the other hand, the closer the light is to the reflective pattern, the more of it can be seen on the lens / in the light of the aperture (curved mirror variant) (Fig. 5, right).

Depending on which approach is used, one can base the projection algorithm on different premises such as:
- extreme colour analysis;
- the colour closest to the centre;
- counting the average colour of the entire view.

The following modifications, which are part of the solution according to the present invention, are possible:
- the reflective pattern can contain colours not only in the visible light spectrum,
- the reflective pattern can be of any shape, with a flat mirror being the most common, but a curved one may be preferable under certain conditions;
- the lens as well as the aperture, when curved mirrors are used, can have different shapes - circle, rectangle, square,
- the digital device can read the measurement by natural light (from the environment) as well as by light emitted directionally towards the analogue device by the digital device,
- the material that changes the angle of the mirror can be sensitive to different physical quantities, so that by modifying this one element, the parameter being measured changes, e.g. temperature, humidity or even wind strength,
- the material that changes the angle of the mirror can change it both by pushing the mirror and by allowing the spring on the opposite side to change the position of the mirror (if the material is stiff it will push the mirror, if flaccid it will be under tension all the time constraining the opposite spring).

### Advantages of the invention

Irrespective of the measured quantity, the system remains largely unchanged. Each measured value only causes a change in the push / pull mechanism of the mirror (a change in its angle), while the layout of the optical elements, the principle of encoding the measured value into a standard value, the method of reading, and the digital - active device (the entire design and software) do not change. This creates a system and method for remote reading via visible light of various physical values. Here with the example of temperature, humidity, wind speed and pressure, but actually any physical value whose change causes expansion / contraction of some material so that it is able to change the position of the mirror.

### Temperature

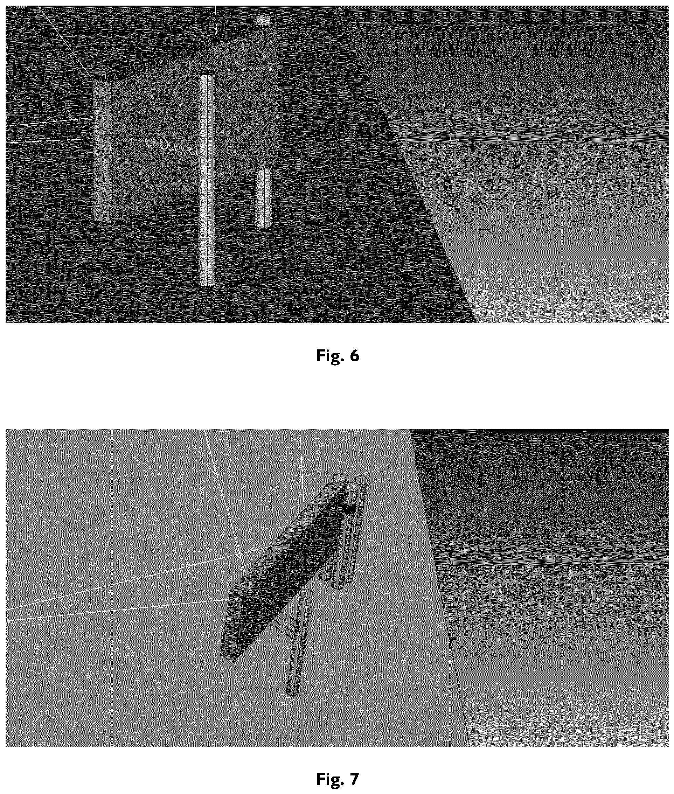

Fig. 6 shows a modification with a rigid material that changes quantity as a function of temperature.

The measurement involves placing a temperature-sensitive element between the mirror and a stationary member. The sensitive element should be rigid and, as the volume increases, it moves the mirror by changing its angle (increasing the pivot, moving the mirror away from the structural element) and vice versa - decreasing the volume - it moves the mirror towards the structural element. This requires that the three elements are connected in such a way as to allow this displacement (hinge / bearing).

### Moisture

Fig. 7 shows a modification with a flexible material that changes quantity according to humidity with a tension spring.

Moisture measurement involves placing moisture-sensitive threads between the mirror and the component. The threads should change their length according to the humidity. They are elastic, so a spring is required to deflect the mirror with a small force, but enough so that the threads always remain taut. When the threads shrink - the mirror is attracted and the spring experiences more stress, when the threads stretch - the mirror is repelled by the spring, but still in a way limited by the length of the threads.

### Wind speed

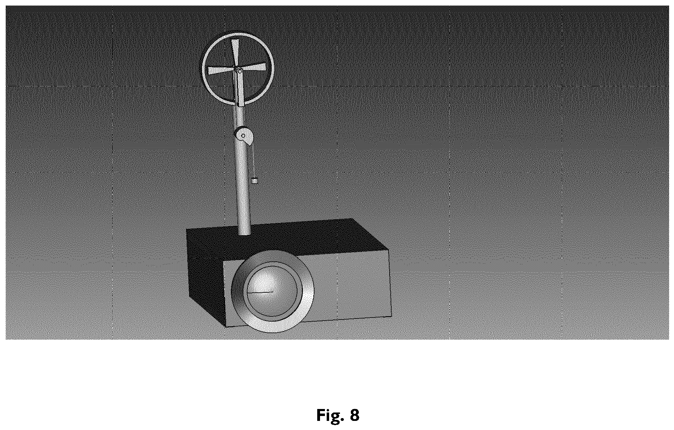

Fig. 8 shows the addition of a mechanical anemometer mechanism (using the Israeli Abraham Staffel anemometer design as an example).

For such a device, the easiest way is to modify a Staffel anemometer. The measurement consists of a rotor that rotates as fast as the wind blows. The measuring system also has a weight suspended from a rope attached to the auger. When it is not blowing, the rotor does not spin and the weight rests at its lowest possible position. When the wind starts to move the wings of the rotor the weight is lifted by the rotation of the auger. As the worm rotates, more and more force is required to lift the weight (constant mass) as the radius (distance of the rope from the centre of rotation of the worm) changes. The device also requires a gearing system such that the rotor moves independently and the rotor can continue to rotate despite too much resistance provided by the weight (in a given position). The system strives for a balance between the force supplied by the rotor from the wind and the gravity of the weight.

Originally, there was an arrow attached to the auger against a scale background, which through this balance point indicated a numerical value that corresponded to the wind speed. After modification, the equilibrium point is transmitted via a gear system to the mirror swing instead of to the arrow swing.

### Pressure

It is also possible to use a mechanism from a tubular spring manometer (Bourdon tube) to change the angle of the mirror.

## Claims

1. A system for a remote measurement of a change of a physical quantity which includes an analogue measuring device and a digital distance sensing device, **characterised in that** it includes:
- an analogue measuring device requiring no power supply, which has a housing (5) in which there is an opening for the light beam (3), a mirror (4) onto which the light beam (3) falls, which mirror (4) is connected to a material (6) sensitive to the physical quantity being measured, a light focusing element (2, 8) and a colour reflective standard (7), whereby the analogue measuring device uses a change of a physical quantity in the material (6) sensitive to the measured quantity to change the position angle of the mirror (4), which reflects the light beam (3) from the light focusing element (2, 8) and directs it to the colour reflective standard (7), mechanically converting the measurement result to a specific colour from the standard, which then reflects the beam of a specific colour outside the housing (5), allowing the colour to be read;
- a digital device that reads colour from a distance and assigns a specific change of a physical quantity value to that particular colour.

2. The system for a remote measurement of change of a physical quantity according to claim 1, **characterised in that** the focusing element is a focusing lens (2) fixed in one of the sides of the housing (5) of the analogue measuring device or a curved mirror (8) fixed inside the analogue measuring device.

3. The system for a remote measurement of change of a physical quantity according to claim 2, **characterised in that** the analogue measuring device additionally comprises a perimeter (1) around the opening for the light beam (3).

4. The system for a remote measurement of change of a physical quantity according to claim 2, **characterised in that** the analogue measuring device additionally comprises a periphery (1) of a lens (2), advantageously equipped with a colour standard.

5. The system for a remote measurement of change of a physical quantity according to claim 2 or 4, **characterised in that** the focusing lens (2) is equipped with polarising filters to counteract the reflection of light through the lens.

6. The system for a remote measurement of change of a physical quantity according to any of the claims 1-5, **characterised in that** the digital colour-reading device from a distance is an apparatus or a camera or a colour-sensitive detector with embedded software.

7. The system for a remote measurement of change of a physical quantity according to any of the claims 1-6, **characterised in that** the digital colour-reading device taking pictures from a distance captures the measurement by synchronising data from all analogue devices to which it is directed, after which the software reads the colour from the lens / aperture light, advantageously corrects for the colour from the periphery constituting the standard and projects it onto the measured value.

8. The system for a remote measurement of change of a physical quantity according to any of the claims 1-7, **characterised in that** the reflective standard (7) contains colours not only in the visible light spectrum.

9. The system for a remote measurement of change of a physical quantity according to any of the claims 1-8, **characterised in that** the reflective standard (7) has any shape, such as a plane mirror, or a curved mirror.

10. The system for a remote measurement of change of a physical quantity according to any of the claims 1-9, **characterised in that** the focusing lens (2) as well as the aperture, when curved mirrors are used, can have different shapes such as circular, rectangular, square.

11. The system for a remote measurement of change of a physical quantity according to any of the claims 1-10, **characterised in that** the reading of the measurement by the digital device can take place using either natural light from the environment or light emitted directionally towards the analogue device by the digital device.

12. The system for a remote measurement of change of a physical quantity according to any of the claims 1-11, **characterised in that** the material (6) changing the position angle of the mirror (4) is sensitive to various physical quantities such as temperature, humidity, pressure, wind force,

13. The system for a remote measurement of change of a physical quantity according to any of the claims 1-12, **characterised in that** the material (6) which changes the angle of the position of the mirror (4) changes this angle by repelling or pushing the mirror (4) either directly or via a spring.
